# FASCICULE DE BREVET EUROPEEN

(11) **EP 2 833 771 B1**
(45) Date de publication et mention de la délivrance du brevet: **04.11.2015**
(21) Numéro de dépôt: 13719968.3
(22) Date de dépôt: 02.04.2013
(51) Int. Cl.: A47J 45/07

(54) **POIGNEE AMOVIBLE COOPERANT AVEC UNE ANSE**
ABNEHMBARER GRIFF MIT EINRASTUNG IN EINEN SCHAFT
REMOVABLE HANDLE ENGAGING WITH A SHANK

(30) Priorité: 04.04.2012 FR 1253067
(43) Date de publication de la demande: 11.02.2015
(73) Titulaire: SEB S.A., 69130 Ecully (FR)
(72) Inventeur: MONTGELARD, Michel, 73100 Aix Les Bains (FR)
(74) Mandataire: Bourrières, Patrice
(86) Numéro de dépôt international: PCT/FR2013/050726
(87) Numéro de publication internationale: WO 2013/150236

(56) Documents cités:
- US-A- 1 268 089
- US-A1- 2008 006 645

## Description

La présente invention se rapporte au domaine technique général des poignées amovibles, destinées à coopérer avec un article culinaire, présentant au moins une anse recourbée vers l'extérieur.

Il est connu, du brevet US1268089, une poignée amovible, destinée à coopérer avec un article culinaire comprenant une anse recourbée vers l'extérieur et dans laquelle est ménagée une ouverture. La poignée amovible comporte un corps de préhension muni d'un bec susceptible d'être introduit par le dessus dans l'ouverture pour coopérer avec une face inférieure de l'anse et d'un organe d'appui coopérant avec une face supérieure de l'anse. La poignée comprend un dispositif de verrouillage comportant un verrou mobile entre une première position d'accouplement de la poignée sur l'anse dans laquelle le verrou est agencé sous l'anse et une deuxième position de désaccouplement dans laquelle le verrou est à coté de l'anse. Le dispositif de verrouillage comporte un bouton de manoeuvre du verrou, agencé sur le corps de préhension.

Une telle poignée présente l'avantage de permettre de désaccoupler facilement la poignée de l'article culinaire lorsque celui-ci est chauffé évitant ainsi de chauffer la poignée.

Cependant, dans un tel dispositif de préhension, l'effort à appliquer par l'utilisateur sur le bouton de manoeuvre pour déplacer le verrou est important, dû au frottement du verrou sur l'anse, notamment lorsque l'article culinaire repose sur une surface de travail et que l'utilisateur lève la poignée avant de manoeuvrer le verrou.

Un jeu mécanique conséquent est donc nécessaire entre le verrou et l'anse pour obtenir un effort de manoeuvre du verrou acceptable, notamment lors du recul du verrou pour désaccoupler la poignée de l'anse. Ainsi un tel dispositif de préhension présente l'inconvénient de ne pas permettre une parfaite immobilisation de la poignée, notamment suivant un axe transversal vertical à l'axe longitudinal de la poignée.

Le but de la présente invention est de remédier aux inconvénients précités et de proposer une poignée amovible présentant une ergonomie optimisée pour permettre à l'utilisateur de la manipuler facilement, en toute sécurité.

Un autre but de l'invention est de proposer une poignée amovible qui soit de conception simple et économique à mettre en oeuvre.

Un autre but de l'invention est de proposer une poignée amovible et un article culinaire qui puisse être rangés facilement.

Ces buts sont atteints avec une poignée amovible, destinée à coopérer avec un article culinaire, comprenant au moins une anse recourbée vers l'extérieur et dans laquelle est ménagée une ouverture, ladite poignée amovible s'étendant selon un axe longitudinal et comportant à une extrémité un bec susceptible d'être introduit dans ladite ouverture, ledit bec étant muni d'une paroi d'appui inférieure pour coopérer avec une face supérieure de l'anse, ladite poignée comportant un dispositif de verrouillage comprenant un verrou mobile entre une première position dite d'accouplement dans laquelle la poignée est assemblée sur l'anse et une deuxième position dite de désaccouplement dans laquelle la poignée peut être désassemblée de l'anse, caractérisé en ce que le verrou comporte un organe de pincement de l'anse, mobile entre une position de libération de l'anse occupée lorsque le verrou est en position de désaccouplement et une position de blocage de l'anse occupée lorsque le verrou est dans la position d'accouplement et en ce que, dans la position de blocage, l'organe de pincement exerce un effort sur l'anse pour la plaquer contre la paroi d'appui inférieure selon un axe perpendiculaire à l'axe longitudinal.

L'organe de pincement, mobile et coopérant avec la paroi d'appui inférieure permet de pincer l'anse et ainsi de supprimer les jeux verticaux, une fois la poignée agencée sur l'anse. L'absence de mouvement relatif entre l'anse et la poignée lors des manipulations de l'article culinaire permet d'améliorer l'ergonomie et la qualité perçue par l'utilisateur.

Avantageusement, le verrou est mobile en translation suivant l'axe longitudinal.

Cette disposition permet d'obtenir de manière simple et économique un verrou mobile.

De préférence, l'organe de pincement est formé par une came mobile en rotation par rapport au verrou autour d'un axe perpendiculaire à l'axe longitudinal.

Cette disposition permet d'obtenir un pincement efficace de l'anse par la came. Un faible effort de mise en rotation de la came permet de bloquer l'anse sur la poignée.

Avantageusement, la came mobile comporte une excroissance destinée à coopérer avec un bord externe de l'anse pour mettre la came en rotation lors du déplacement du verrou de la position de désaccouplement à la position d'accouplement, la came passant ainsi de la position de libération à la position de blocage.

Cette disposition permet d'obtenir une mise en rotation de la came de manière automatique, l'utilisateur n'ayant qu'à déplacer le verrou pour accoupler ou désaccoupler la poignée de l'anse. De plus, lors du blocage ou de la libération de la poignée, la came roule sur la face inférieure de l'anse. Ainsi l'application d'un effort faible permet le déplacement du verrou et la rotation de la came.

De préférence, le dispositif de verrouillage comporte des moyens de rappel du verrou en position d'accouplement.

Cette disposition permet d'obtenir un maintien automatique du verrou en positon d'accouplement avec un effort constant appliqué sur l'excroissance de la came. Ainsi le pincement de l'anse par la came est sensiblement constant et efficace.

Avantageusement, le dispositif de verrouillage comporte des moyens de rappel de l'organe de pincement dans la position de libération.

Cette disposition permet un retour automatique en position de libération de l'organe pincement formée avantageusement par la came et de son excroissance.

De préférence, le dispositif de verrouillage comporte un bouton de manoeuvre du verrou, agencé sur le corps de préhension.

Cette disposition permet à l'utilisateur de commander facilement avec un doigt le verrou, tout en tenant la poignée avec la même main.

L'invention concerne également un article culinaire comportant une anse coopérant avec une poignée amovible telle que précédemment décrite.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
- la figure 1 est une vue d'ensemble en perspective d'une poignée amovible selon un mode particulier de réalisation de l'invention agencé sur une anse d'un article culinaire,
- la figure 2 est une vue en perspective de la poignée amovible et de l'anse de la figure 1,
- la figure 3 est une vue de dessus de la poignée amovible de la figure 1 accouplée et bloquée sur l'anse de l'article culinaire,
- la figure 4 est une vue partielle du dessous de la poignée de la figure 3,
- la figure 5 est une vue partielle du dessous de la poignée de la figure 3 selon un autre mode de réalisation,
- la figure 6 est une vue en coupe de la poignée amovible suivant le plan de coupe VI de la figure 3,
- la figure 7 est une vue en coupe suivant le plan de coupe VI de la figure 3 de la poignée amovible agencée sur l'anse, le verrou étant en position de désaccouplement et l'organe de pincement étant en position de libération,
- la figure 8 est une vue en coupe suivant le plan de coupe VI de la figure 3 de la poignée amovible agencée sur l'anse, le verrou étant en position d'accouplement et l'organe de pincement étant en position de blocage,
- la figure 9 est un agrandissement d'un détail IX de la figure 7.
- la figure 10 est un agrandissement d'un détail X de la figure 8.

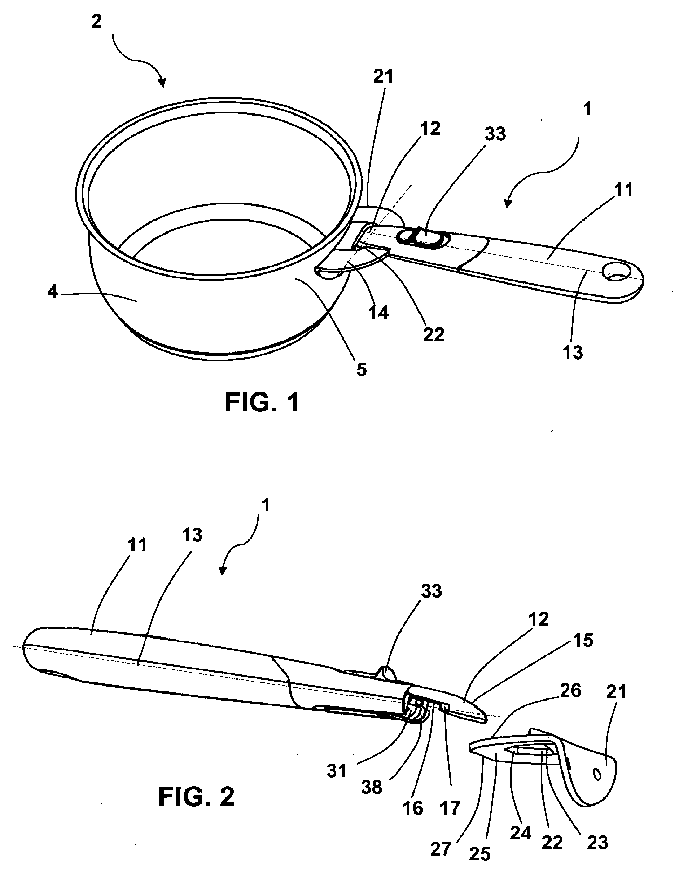

Les figures 1 et 2 illustrent un article culinaire 2 comportant une calotte 4 munie d'une paroi latérale 5 sur laquelle est rapportée une anse 21. L'anse 21 est fixée sur la paroi latérale 5 notamment par deux rivets. L'anse 21 s'étend radialement par rapport à la paroi latérale 5 dans un plan sensiblement horizontal, parallèle au plan de pose de la calotte 4 et comporte une ouverture 22 qui s'étend principalement dans une direction tangentielle à la paroi latérale 5.

L'article culinaire 2 comporte une poignée 1 amovible s'étendant selon un axe longitudinal 13 et comprenant à une extrémité un bec 12 destiné à coopérer avec l'ouverture 22 pour assembler ou désassembler la poignée 1 de l'anse 21. La poignée 1 comporte un corps de préhension 11 qui permet une fois la poignée 1 assemblée sur l'anse 21 de manipuler l'article culinaire 2.

Le bec 12 est introduit dans l'ouverture 22 par le dessus pour s'assembler sur l'anse 21 par basculement autour d'un axe de pivotement 14, transversal à l'axe longitudinal 13 et compris dans le plan horizontal. Le bec 12 comporte une face supérieure d'extrémité 15 inclinée qui coopère avec une face inférieure 23 de l'anse 21 pour former un premier appui antérieur à l'axe de pivotement 14. Le bec 12 comporte une paroi d'appui inférieure 16 qui coopère avec une face supérieure 26 de l'anse pour former un deuxième appui postérieur à l'axe de pivotement 14. Ainsi lors de la manipulation par l'utilisateur, le poids de l'article culinaire 2 crée un couple autour de l'axe de pivotement 14 qui génère un premier effort sur le premier appui et un deuxième effort sur le deuxième appui de direction opposée.

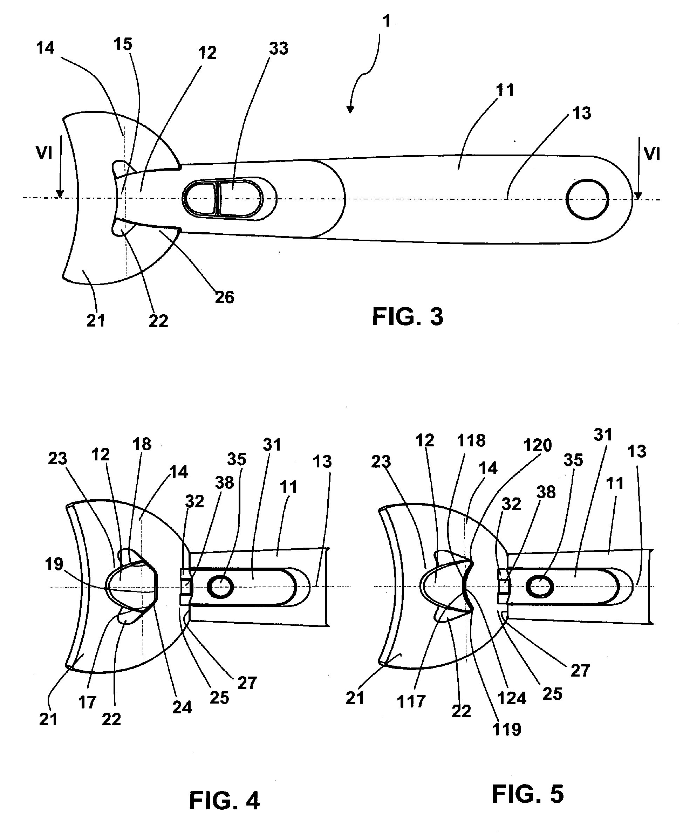

Conformément aux figures 4 et 5, le bec 12 comporte une première surface d'appui 17, 18, 117, 118, perpendiculaire à la paroi d'appui inférieure 16 et coopérant avec une paroi interne 24, 124 de l'ouverture 22 pour immobiliser la poignée 1 sur l'anse 21 selon l'axe longitudinal 13 et avantageusement également dans une direction transversale à l'axe longitudinal, incluse dans le plan horizontal lorsque la poignée 1 est assemblée sur l'anse 21.

Selon un premier mode de réalisation illustré à la figure 4, la première surface d'appui comporte deux parois planes inclinées 17, 18 et symétriques par rapport à l'axe longitudinal 13. L'angle formé par le plan passant par une des parois planes inclinées 17, 18 et l'axe longitudinal est égal à 45°. Une paroi plane perpendiculaire 19 à l'axe longitudinal relie les deux parois planes inclinées 17, 18. La paroi interne 24 de l'ouverture 22 a une forme complémentaire à la forme de la première surface d'appui 17, 18.

Selon un deuxième mode de réalisation illustré à la figure 5, la première surface d'appui comporte deux parois en arc de cercle 117, 118, symétriques par rapport à l'axe longitudinal et qui se prolongent respectivement par un rayon 119, 120 de courbure inverse à la courbure des parois en arc de cercle 117, 118. La première surface d'appui a une forme générale concave. La paroi interne 124 de l'ouverture 22 a une forme complémentaire à la forme de la première surface d'appui 117, 118.

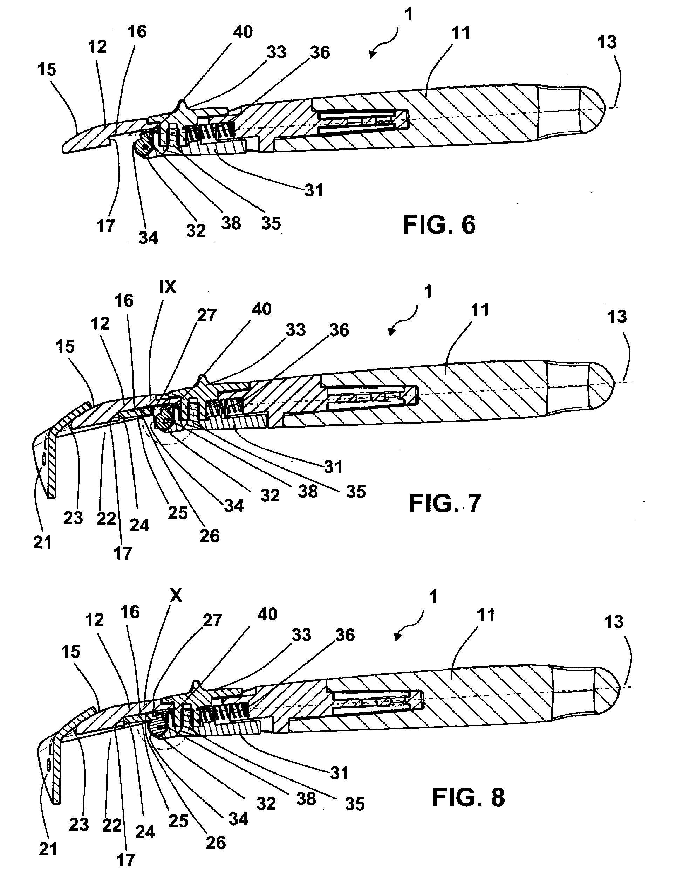

Tel que visible aux figures 7 et 8, le bec 12 comporte une deuxième surface d'appui formée par la face supérieure d'extrémité 15 inclinée qui coopère avec l'anse 21 pour générer sur le bec 12 un effort suivant l'axe longitudinal 13 proportionnel au couple exercé par le poids de l'article culinaire. L'effort généré permet de plaquer la première surface d'appui 17, 18 contre la paroi interne 24 de l'ouverture. La face supérieure d'extrémité 15 inclinée du bec 12 a sensiblement la forme de l'enveloppe extérieure d'un demi-cône à base oblongue engendré par une ligne sensiblement droite qui coupe l'axe longitudinal 13 en un même point (Fig. 1 et 2). La partie pointue d'extrémité est tronquée et arrondie.

Tel qu'illustré aux figures 6 à 10, la poignée 1 comporte un dispositif de verrouillage comprenant un verrou 31 mobile en translation suivant l'axe longitudinal 13. Le verrou 31 est mobile entre une première position dite d'accouplement dans laquelle la poignée 1 est assemblée sur l'anse 21 et une deuxième position dite de désaccouplement dans laquelle la poignée 1 peut être désassemblée de l'anse 21. Le verrou 31 comporte une extrémité avant 32 qui est glissée sous une face inférieure externe 25 de l'anse 21 dans la position d'accouplement. Un bouton de manoeuvre 33 est agencé sur le corps de préhension 11 et est fixé sur le verrou 31 par l'intermédiaire d'une vis 35 pour permettre la commande du verrou 31.

Un ressort 36 de rappel est agencé dans le corps de préhension 11 pour rappeler le verrou 31 en position d'accouplement. L'extrémité avant 32 du verrou 31 comporte une face arrondie 34 qui coopère avec un bord externe 27 de l'anse 21 lors de l'assemblage de la poignée 1 par basculement sur l'anse 21. Ainsi, le recul du verrou 31 lors de l'assemblage de la poignée 1 sur l'anse 21 est automatique.

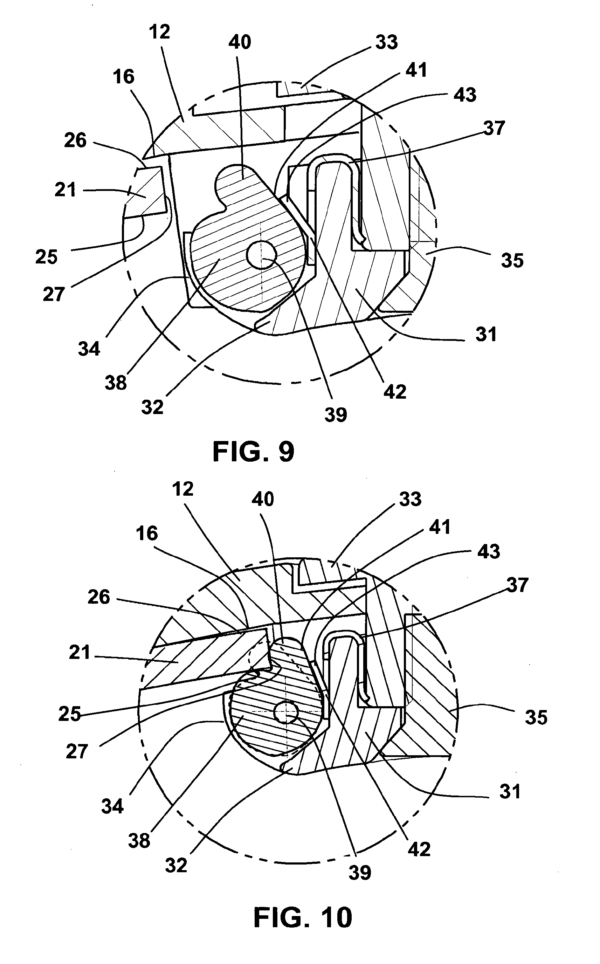

L'extrémité avant 32 du verrou 31 comporte une came 38 mobile en rotation par rapport au verrou 31 autour d'un axe 39 perpendiculaire à l'axe longitudinal 13. La came 38 est mobile entre une position de libération de l'anse 21 (Fig.7 et 9) et une position de blocage de l'anse 21 dans laquelle la came 38 mobile exerce un effort sur l'anse 21 pour la plaquer contre la paroi d'appui inférieure 16 du bec 12 selon un axe perpendiculaire à l'axe longitudinal 13, le verrou 31 étant dans la position d'accouplement (Fig. 8 et 10).

La came 38 mobile comporte une excroissance 40 destinée à coopérer avec le bord externe 27 de l'anse 21 pour mettre la came 38 en rotation lors du déplacement du verrou 31 de la position de désaccouplement à la position d'accouplement. La came 38 passe ainsi de la position de libération à la position de blocage. Sur la figure 10, la came 38 est ajoutée en surimpression en trait pointillé dans sa position de libération de la figure 9 pour illustrer les deux positions. Dans la position de blocage, l'effort exercé par la came 38 sur l'anse 21 est proportionnel à l'effort de rappel du ressort 36 sur le verrou 31.

Une lame ressort 37 (Fig. 9, 10) assure le retour de la came 38 mobile en position de libération. La lame ressort 37 comporte une première extrémité 42 qui est fixée au verrou 31 et une deuxième extrémité 43 qui prend appui sur une paroi 41 de la came 38 mobile. L'appui de la deuxième extrémité 43 de la lame ressort 37 sur la paroi 41 de la came 38 mobile crée un couple de mise en rotation de la came 38 mobile.

En fonctionnement, l'utilisateur saisit le corps de préhension 11 de la poignée 1 et introduit le bec 12 dans l'ouverture 22 par le dessus. Ensuite, il fait basculer la poignée 1 autour d'un axe de pivotement 14, transversal à l'axe longitudinal 13 et compris dans le plan horizontal. Ainsi la face supérieure d'extrémité 15 du bec 12 vient en contact avec la face inférieure 23 de l'anse 21, la première surface d'appui 17, 18 du bec 12 vient en contact avec la paroi interne 24 de l'ouverture 22 puis la face arrondie 34 de l'extrémité avant 32 du verrou 31 prend appui sur le bord externe 27 de l'anse 21. En poursuivant le basculement de la poignée 1, le verrou 31 va reculer à l'encontre de la force de rappel du ressort 36. Lorsque la poignée 1 est quasiment en position assemblé sur l'anse 21 (Fig. 7), l'extrémité avant 32 du verrou 31 glisse sous la face inférieure externe 25 sous l'effet du ressort 36, l'excroissance 40 de la came 38 mobile prend alors appui sur le bord externe 27 et la came 38 pivote à l'encontre de la force de rappel de la lame ressort 37 puis plaque l'anse 21 contre la paroi d'appui inférieure 16 du bec 12 (Fig. 8, 10).

Lorsque l'utilisateur manipule l'article culinaire 2, le poids de l'article culinaire 2 génère, à l'aide de la face supérieure d'extrémité 15 inclinée qui coopère avec l'anse 21, un effort sur le bec 12 suivant l'axe longitudinal 13 qui plaque la première surface d'appui 17, 18 contre la paroi interne 24 de l'ouverture 22.

Pour désassembler la poignée 1 de l'anse 21, l'utilisateur commande le bouton de manoeuvre 33 pour faire reculer le verrou 31 en position de désaccouplement, à l'encontre de la force de rappel du ressort 36. Lors du déplacement du verrou 31, la lame ressort 37 va faire pivoter la came 38 mobile de la position de blocage à la position de libération. L'utilisateur peut ensuite basculer la poignée 1 et extraire le bec 12 de l'ouverture 22 de l'anse 21, tout en relâchant le bouton de manoeuvre 33.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Ainsi le verrou 31 peut être mobile en rotation suivant un axe perpendiculaire à l'axe longitudinal 13.

Dans une variante de réalisation, la came 38 mobile peut être mise en rotation par un levier actionné par l'utilisateur.

## Revendications

1. Poignée (1) amovible, destinée à coopérer avec un article culinaire (2) comprenant au moins une anse (21) recourbée vers l'extérieur et dans laquelle est ménagée une ouverture (22), ladite poignée (1) amovible s'étendant selon un axe longitudinal (13) et comportant à une extrémité un bec (12) susceptible d'être introduit dans ladite ouverture (22), ledit bec (12) étant muni d'une paroi d'appui inférieure (16) pour coopérer avec une face supérieure (26) de l'anse (21), ladite poignée (1) comportant un dispositif de verrouillage comprenant un verrou (31) mobile entre une première position dite d'accouplement dans laquelle la poignée (1) est assemblée sur l'anse (21) et une deuxième position dite de désaccouplement dans laquelle la poignée (1) peut être désassemblée de l'anse (21), **caractérisée en ce que** le verrou (31) comporte un organe de pincement (38) de l'anse (21), mobile par rapport au verrou entre une position de libération de l'anse (21) occupée lorsque le verrou (31) est en position de désaccouplement et une position de blocage de l'anse (21) occupée lorsque le verrou (31) est dans la position d'accouplement et **en ce que**, dans la position de blocage, l'organe de pincement (38) exerce un effort sur l'anse (21) pour la plaquer contre la paroi d'appui inférieure (16) selon un axe perpendiculaire à l'axe longitudinal (13).

2. Poignée (1) amovible selon la revendication 1 **caractérisée en ce que** le verrou (31) est mobile en translation suivant l'axe longitudinal (13).

3. Poignée (1) amovible selon l'une quelconque des revendications 1 à 2 **caractérisée en ce que** l'organe de pincement est formé par une came (38) mobile en rotation par rapport au verrou (31) autour d'un axe perpendiculaire à l'axe longitudinal (13).

4. Poignée (1) amovible selon la revendication 3 **caractérisée en ce que** la came (38) mobile comporte une excroissance (40) destinée à coopérer avec un bord externe (27) de l'anse (21) pour mettre ladite came (38) en rotation lors du déplacement du verrou (31) de la position de désaccouplement à la position d'accouplement, ladite came (38) passant ainsi de la position de libération à la position de blocage.

5. Poignée (1) amovible selon l'une quelconque des revendications 1 à 4, **caractérisée en ce que** le dispositif de verrouillage comporte des moyens de rappel (36) du verrou (31) en position d'accouplement.

6. Poignée (1) amovible selon l'une quelconque des revendications 1 à 5, **caractérisée en ce que** ledit dispositif de verrouillage comporte des moyens de rappel (37) de l'organe de pincement (38) dans la position de libération.

7. Poignée (1) amovible selon l'une quelconque des revendications 1 à 6 **caractérisée en ce que** la poignée comporte un corps de préhension (11) et **en ce que** le dispositif de verrouillage comporte un bouton de manoeuvre (33) du verrou (31), agencé sur le corps de préhension (11).

8. Article culinaire (2) comportant une anse (21) et une poignée (1) amovible selon l'une quelconque des revendications 1 à 7.

## Patentansprüche

1. Abnehmbarer Griff (1), der dazu bestimmt ist, mit einem Küchenartikel (2) zusammenzuwirken, der mindestens einen Henkel (21) umfasst, der nach außen gebogen ist und in dem eine Öffnung (22) eingelassen ist, wobei der genannte abnehmbare Griff (1) sich über eine Längsachse (13) erstreckt und er an seinem Ende eine Spitze (12) aufweist, die in die genannte Öffnung (22) eingeführt werden kann, wobei die genannte Spitze (12) mit einer unteren Stützwand (16) versehen ist, um mit einer oberen Fläche (26) des Henkels (21) zusammenzuwirken, wobei der genannte Griff (1) mit einer Verriegelungsvorrichtung einschließlich eines Riegels (31) versehen ist, der beweglich ist zwischen einer ersten Position, der Verkuppelposition, in der der Griff (1) mit dem Henkel (21) zusammengesetzt ist, und einer zweiten Position, der Entkuppelposition, in der der Griff (1) von dem Henkel (21) entfernt werden kann, **dadurch gekennzeichnet, dass** der Riegel (31) ein Klemmelement (38) für den Henkel (21) umfasst, das am Riegel beweglich ist zwischen einer Position zur Freigabe des Henkels (21), die eingenommen wird, wenn der Riegel (31) sich in der Entkuppelposition befindet, und einer Position zur Blockierung des Henkels (21), die eingenommen wird, wenn der Riegel (31) sich in der Verkuppelposition befindet, sowie dadurch, dass in der Blockierungsposition das Klemmelement (38) eine Kraft auf den Henkel (21) ausübt, um diesen gegen die untere Stützwand (16) entlang einer senkrecht zur Längsachse (13) verlaufenden Achse zu pressen.

2. Abnehmbarer Griff (1) nach Anspruch 1, **dadurch gekennzeichnet, dass** der Riegel (31) entlang der Längsachse (13) verschiebbar ist.

3. Abnehmbarer Griff (1) nach einem der Ansprüche 1 bis 2, **dadurch gekennzeichnet, dass** das Klemmelement durch einen Zapfen (38) gebildet wird, der am Riegel (31) um eine senkrecht zur Längsachse (13) verlaufende Achse herum drehbar ist.

4. Abnehmbarer Griff (1) nach Anspruch 3, **dadurch gekennzeichnet, dass** der bewegliche Zapfen (38) eine Ausstülpung (40) aufweist, die dazu bestimmt ist, mit einer Außenkante (27) des Henkels (21) zusammenzuwirken, um den genannten Zapfen (38) in eine Drehung zu versetzen, wenn der Riegel (31) aus der Entkuppelposition in die Verkuppelposition verlagert wird, wobei der genannte Zapfen (38) so von der Freigabeposition in die Blockierungsposition übergeht.

5. Abnehmbarer Griff (1) nach einem der Ansprüche 1 bis 4, **dadurch gekennzeichnet, dass** die Verriegelungsvorrichtung Mittel (36) zur Rückstellung des Riegels (31) in die Verkuppelposition aufweist.

6. Abnehmbarer Griff (1) nach einem der Ansprüche 1 bis 5, **dadurch gekennzeichnet, dass** die genannte Verriegelungsvorrichtung Mittel (37) zur Rückstellung des Klemmelements (38) in die Freigabeposition aufweist.

7. Abnehmbarer Griff (1) nach einem der Ansprüche 1 bis 6, **dadurch gekennzeichnet, dass** der Griff einen Haltekörper (11) umfasst und dadurch, dass die Verriegelungsvorrichtung einen Knopf (33) zur Betätigung des Riegels (31) ausweist, der an dem Haltekörper (11) angeordnet ist.

8. Küchenartikel (2) mit einem Henkel (21) und einem abnehmbaren Griff (1) nach einem der Ansprüche 1 bis 7.

## Claims

1. Removable handle (1), designed to cooperate with a kitchen appliance (2) comprising at least one loop (21) curved towards the exterior and in which is added an opening (22), the aforementioned removable handle (1) extending along a longitudinal axis (13) and comprising a spout (12) at the end that may be introduced into the aforementioned opening (22), the aforementioned spout (12) being equipped with a lower support wall (16) to cooperate with an upper face (26) of the loop (21), the aforementioned handle (1) comprising a locking device with a lock (31) moving between a first position known as coupling, in which the handle (1) is assembled onto the loop (21), and a second position known as an uncoupling, in which the handle (1) can be detached from the loop (21), **characterised in that** the lock (31) comprises a clamping element (38) for the loop (21), moving in relation to the lock between a release position for the loop (21) occupied when the lock (31) is in the coupling position and when, in the locked position, the clamping element (38) applies force to the loop (21) to hold it against the lower support wall (16) along axis perpendicular to the longitudinal axis (13).

2. Removable handle (1) according to claim 1 **characterised in that** the lock (31) is movable in translation along the longitudinal axis (13).

3. Removable handle (1) according to any one of claims 1 to 2, **characterised in** the clamping element is formed by a cam (38) that rotates in relation to the lock (31) around a perpendicular axis to the longitudinal axis (13).

4. Removable handle (1) according to claim 3, **characterised in that** the moving cam (38) has a projection (40) destined to cooperate with an outer edge (27) of the loop (21) to place the aforementioned cam (38) in rotation when the lock (31) is moved from the uncoupling position to the coupling position, the aforementioned cam (38) thereby moving from the release position to the locking position.

5. Removable handle (1) according to any one of claims 1 to 4, **characterised in that** the locking device comprises a means (36) of returning the lock (31) to the coupling position.

6. Removable handle (1) according to any one of claims 1 to 5, **characterised in that** the aforementioned locking device comprises a means (37) of returning the clamping element (31) to the release position.

7. Removable handle (1) according to any one of claims 1 to 6, **characterised in that** the handle comprises the body of the grip (11) and **in that** the locking device comprises an operating knob (33) of the lock (31), assembled on body of the grip (11).

8. Kitchen appliance (2) comprising a loop (21) and a removable handle (1) according to any one of claims 1 to 7.
